# EUROPEAN PATENT SPECIFICATION

(11) **EP 3 041 384 B1**
(45) Date of publication and mention of the grant of the patent: **28.12.2016**
(21) Application number: 14786301.3
(22) Date of filing: 28.08.2014
(51) Int. Cl.: A46B 9/02, A46B 13/00, B60S 3/06

(54) **PERFORATED BAND CONSTRUCTION FOR MOTOR VEHICLE WASHING SYSTEM ROTARY BRUSH ASSEMBLIES**
PERFORIERTE BANDKONSTRUKTION FÜR DREHBÜRSTENANORDNUNGEN FÜR KRAFTFAHRZEUGWASCHANLAGEN
STRUCTURE À BANDES PERFORÉES POUR DES ENSEMBLES BROSSES ROTATIVES DE SYSTÈME DE LAVAGE DE VÉHICULES À MOTEUR

(30) Priority: 05.09.2013 IT MI20131458
(43) Date of publication of application: 13.07.2016
(73) Proprietor: Favagrossa Edoardo S.r.l., 26041 Roncadello di Casalmaggiore (CR) (IT)
(72) Inventor: FAVAGROSSA, Leonardo, I-26041 Roncadello di Casalmaggiore (CR) (IT)
(74) Representative: Saporiti, Emilio Luigi
(86) International application number: PCT/IB2014/064125
(87) International publication number: WO 2015/033258

(56) References cited:
- WO-A1-2010/010593
- DE-A1- 4 322 990
- US-A1- 2010 058 549

## Description

### BACKGROUND OF THE INVENTION

The present invention relates to an improved band construction for making rotary brushes for motor vehicle washing systems.

As is known, automatic motor vehicle washing systems comprise rotary washing brush assemblies constituted by a support element coupled to a rotary member, and flexible cleaning elements, arranged near one another, are coupled, at an end portion thereof, to said support element in a perpendicular relationship therewith.

An automatic cleaning and washing, for example of a motor vehicle body, is made by rotatively driving a plurality of the above washing brushes, thereby causing the flexible elements, held in a preset configuration by the centrifugal force generated by said rotating brushes, to impact against the motor vehicle body, through washing water and/or solutions or emulsions.

At present, said cleaning elements are made of a foamed polyethylene material, in the form of threads, filaments or felts, said polyethylene material being either of a closed or open cell type, or a combination thereof, in the form of band strips or fringes.

While cleaning elements comprising cleaning bands are operatively very efficient, they are however affected by some drawbacks, a main of which is the so called "aquaplaning" phenomenon, reducing the cleaning capability of the strips or fringes.

Moreover, cleaning washing brushes including fringe bands are very noisy in operation.

Document US 2010/058549 A1 substantially discloses the preamble of claim 1.

### SUMMARY OF THE INVENTION

The aim of the present invention is to provide an improved band construction, for motor vehicle washing system rotary brush assemblies, overcoming the above mentioned drawbacks of prior cleaning bands.

Within the scope of the above mentioned aim, a main object of the invention is to provide such a band construction having an increased adhesion surface, the band mass being the same, and which is not subjected to the aquaplaning phenomenon.

Another object of the present invention is to provide such a band construction with a small washing operation noise.

Yet another object of the present invention is to provide such a band construction facilitating the washing water removal, thereby holding said band always in a dry and clean condition.

Yet another object of the present invention is to provide such a band construction which, owing to its specifically designed structural features, is very reliable and safe in operation.

According to one aspect of the present invention, the above mentioned aim and objects, as well as yet other objects, which will become more apparent hereinafter, are achieved by an improved band construction for motor vehicle washing system rotary brush assemblies, according to claim 1.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of an indicative but not limitative example, in the accompanying drawings, where:

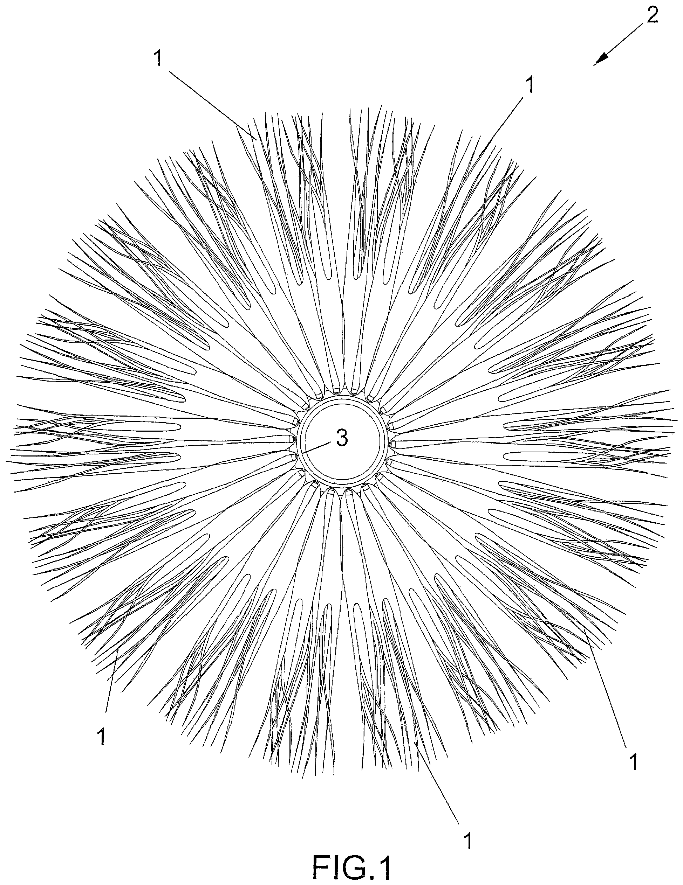

Figure 1 is a front elevation view of a rotary brush including the band elements according to the present invention;

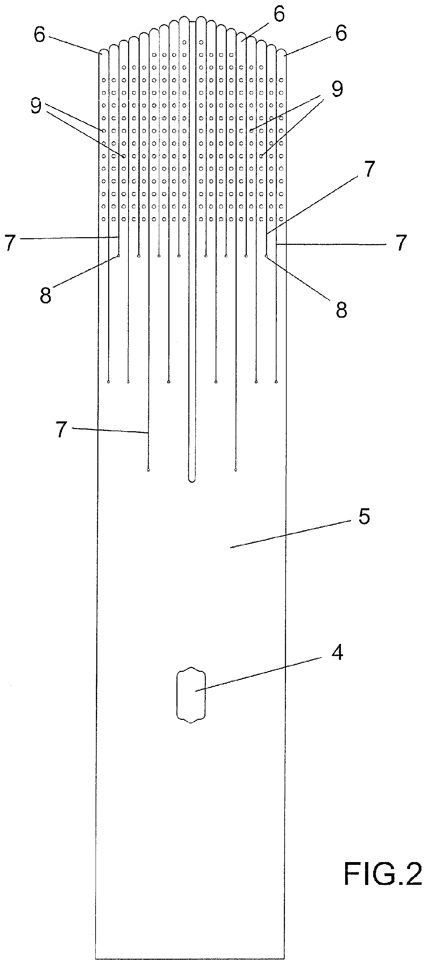

Figure 2 is a top plan view of a band element according to a first aspect of the invention;

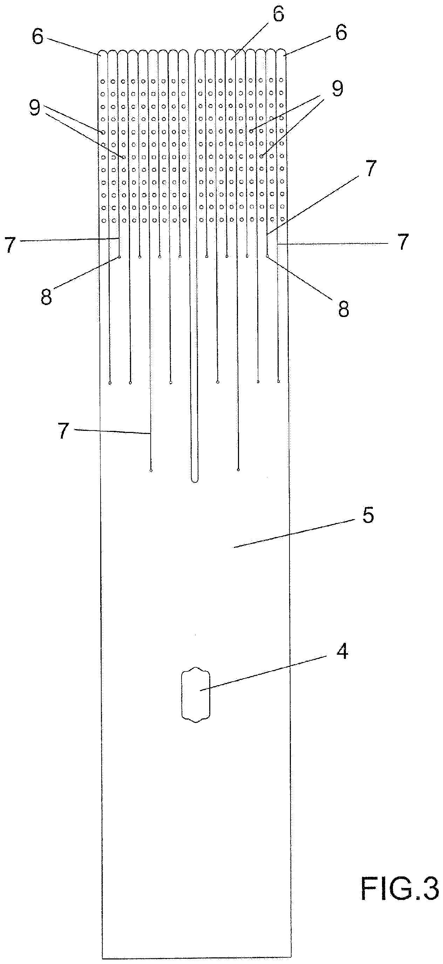

Figure 3 is a further top plan view of a band element according to a further aspect of the invention;
Figure 4 is an enlarged view of an end portion of a band element including a first type of holes;
Figure 5 is a further enlarged view of an end portion of a band element including a second type of holes;
Figure 6 is yet another enlarged view of an end portion of a band element including a third type of holes; and
Figure 7 is an enlarged view of an end portion of a band element including yet another type of holes.

### DESCRIPTION OF THE PREFERRED EMBODIMENTS

With reference to the number references of the above mentioned figures, the improved band construction for motor vehicle washing system rotary brush assemblies, according to the present invention, which has been generally indicated by the reference number 1, is adapted to be used in a rotary washing brush 2 comprising a plurality of band elements 1 to be coupled to a central support 3 by any suitable coupling means.

Each said band element or assembly 1 comprises a plate-like body 5 which may be advantageously made of a closed cell foamed plastic or any other suitable material.

The plate body 5 has a substantially elongated configuration, extending along a band element longitudinal axis, and including a clamping zone 4 to be clamped to the central support element 3.

According to the present invention, said band element 1 comprises an active portion including a plurality of perforated fringes or strips 6.

Said fringes or strips 6 are made by longitudinal cuts 7 ending at an enlarged zone 8 preventing the cuts from extending beyond a preset end because of use stress of a washing brush.

Said fringes or strips 6 comprise a plurality of fringe holes which are preferably symmetrically distributed along each fringe.

Said holes are preferably made by die-cutting and may have different configurations or arrangements.

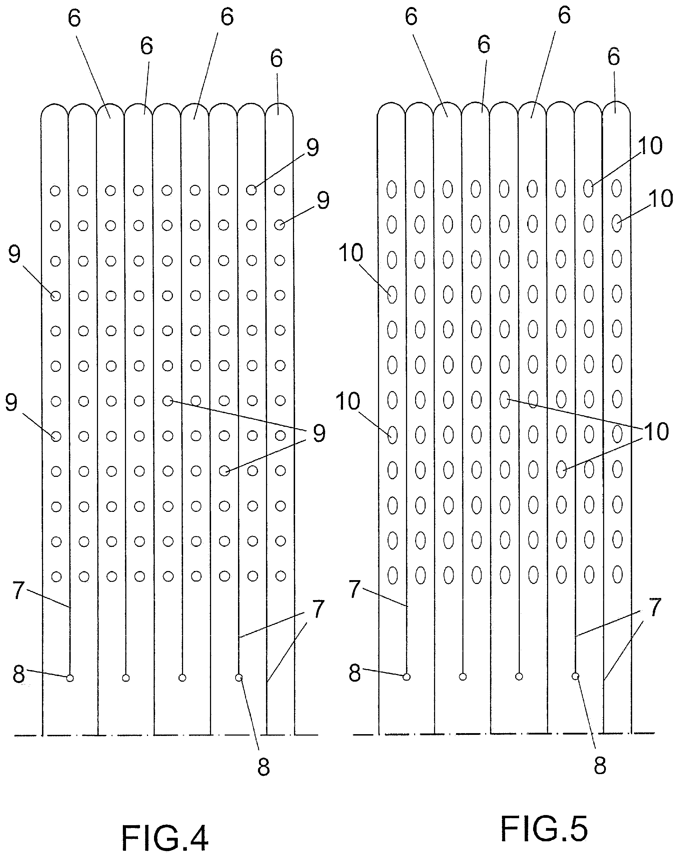

Figure 4 shows an exemplary embodiment in which said holes, indicated by the reference number 9, are circular holes.
Figure 5 shows a further exemplary embodiment in which said holes, indicated by the reference number 10, are oval holes.

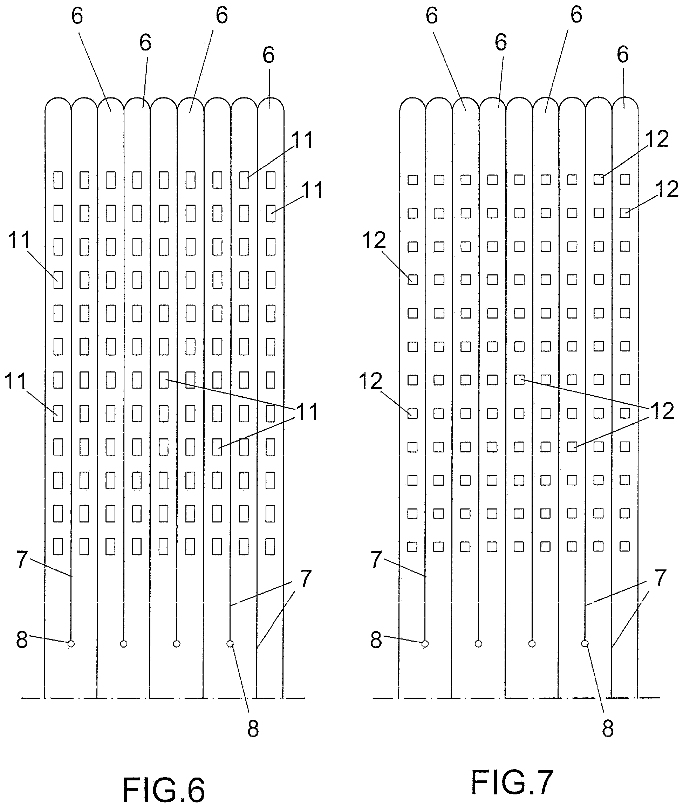

Figure 6 shows a further exemplary embodiment in which said holes, indicated by the reference number 11, are rectangular holes.
Figure 7 shows yet another exemplary embodiment in which said holes, indicated by the reference number 12, are square holes.

It has been found that the invention fully achieves the intended aim and objects.

In fact, the invention has provided a band construction which, owing to the provision of said holes through the band fringes or strips, improves or increases the adhesion surface with respect to the band mass, while overcoming aquaplaning phenomena and increasing the band construction cleaning capability.

Moreover, since said holes reduce the mass of the band material contacting the motor vehicle body surface being cleaned, the washing noise is also greatly reduced.

Furthermore, said holes facilitate the excess water removal, thereby holding the washing brush always in a dry and clean condition.

In addition to the above, it should be also pointed out that a washing brush including the band elements of the present invention has a very good aesthetic aspect, which would be very advantageous on some washing brush markets.

In practicing the invention, the used materials, as well as the contingent size and shapes can be any, depending on requirements.

## Claims

1. An improved band construction (1) for motor vehicle washing system rotary brushes (2), comprising a plate body (5) having a substantially elongated flat configuration, extending along a longitudinal axis of said band, and a clamping zone (4) to be clamped to a central support (3) of a said brush (2), **characterized in that** said plate body comprises a single substantially flat active end portion including a plurality of fringes or strips (6), **that** said fringes comprise a plurality of holes (9, 10, 11, 12) substantially symmetrically distributed and aligned along the longitudinal axis of each said fringe, **that** each said fringe is a substantially rectangular flat fringe having a rounded end portion and **that** all said fringes have either a different or an equal length, thereby said band construction, during a vehicle washing operation, reduces an aquaplaning phenomenon and washing noise, while improving washing water removal, thereby said band construction is always held in a substantially dry condition.

2. A band construction, according to claim 1, **characterized in that** said fringes are made by longitudinal cuts (7) ending with an enlarged zone (8).

3. A band construction, according to claim 1, **characterized in that** each said fringe comprises a plurality of circular holes (9).

4. A band construction, according to claim 1, **characterized in that** each said fringe comprises a plurality of oval holes (10).

5. A band construction, according to claim 1, **characterized in that** each said fringe comprises a plurality of rectangular holes (11).

6. A band construction, according to claim 1, **characterized in that** each said fringe comprises a plurality of square holes (12).

7. A band construction, according to claim 1, **characterized in that** said holes of said fringes are die-cut holes.

## Patentansprüche

1. Verbesserte Bandkonstruktion (1) für Drehbürsten (2) für Kraftfahrzeug-Waschanlagen, die einen Plattenkörper (5), der eine im Wesentlichen längliche flache Konfiguration hat, die sich entlang einer Längsachse des Bandes erstreckt, und eine Klemmzone (4), die an eine mittige Stütze (3) der Bürste (2) zu klemmen ist, umfasst, **dadurch gekennzeichnet, dass** der Plattenkörper einen einzigen im Wesentlichen flachen aktiven Endabschnitt umfasst, der mehrere Fransen oder Streifen (6) einschließt, dass die Fransen mehrere Löcher (9, 10, 11, 12) umfassen, die im Wesentlichen entlang der Längsachse jeder Franse symmetrisch verteilt und ausgerichtet sind, dass jede Franse eine im Wesentlichen rechteckige flache Franse ist, die einen abgerundeten Endabschnitt hat, und dass alle Fransen entweder eine unterschiedliche oder eine gleiche Länge haben, wodurch die Bandkonstruktion, während eines Fahrzeug-Waschvorgangs, eine Aquaplaning-Erscheinung und ein Waschgeräusch verringert, während die Waschwasserentfernung verbessert wird, wodurch die Bandkonstruktion immer in einem im Wesentlichen trockenen Zustand gehalten wird.

2. Bandkonstruktion nach Anspruch 1, **dadurch gekennzeichnet, dass** die Fransen durch Längsschnitte (7), die mit einer verbreiterten Zone (8) enden, hergestellt sind.

3. Bandkonstruktion nach Anspruch 1, **dadurch gekennzeichnet, dass** jede Franse mehrere kreisförmige Löcher (9) umfasst.

4. Bandkonstruktion nach Anspruch 1, **dadurch gekennzeichnet, dass** jede Franse mehrere ovale Löcher (10) umfasst.

5. Bandkonstruktion nach Anspruch 1, **dadurch gekennzeichnet, dass** jede Franse mehrere rechteckige Löcher (11) umfasst.

6. Bandkonstruktion nach Anspruch 1, **dadurch gekennzeichnet, dass** jede Franse mehrere quadratische Löcher (12) umfasst.

7. Bandkonstruktion nach Anspruch 1, **dadurch gekennzeichnet, dass** die Löcher der Fransen gestanzte Löcher sind.

## Revendications

1. Structure à bande améliorée (1) pour brosses rotatives de système de lavage de véhicules à moteur (2), comprenant un corps en forme de plateau (5) doté d'une configuration sensiblement allongée s'étendant suivant un axe longitudinal de ladite bande et une zone de serrage (4) à serrer sur un support central (3) d'une dite brosse (2), **caractérisée en ce que** ledit corps en forme de plateau comprend une section terminale active sensiblement plate comprenant une pluralité de franges ou de bandelettes (6), que lesdites franges comprennent une pluralité de trous (9, 10, 11, 12) répartis sensiblement symétriquement et alignés suivant l'axe longitudinal de chaque frange, que chaque dite frange est une frange sensiblement plate et rectangulaire dotée d'une section terminale arrondie et que toutes lesdites franges ont une longueur soit différente, soit égale, ce qui a pour effet que ladite structure à bande, pendant une opération de lavage de véhicule, réduit un phénomène d'aquaplaning et un bruit de lavage tout en améliorant l'élimination de l'eau de lavage, ce qui a pour effet que ladite structure à bande est toujours maintenue dans un état sensiblement sec.

2. Structure à bande selon la revendication 1, **caractérisée en ce que** lesdites franges sont constituées par des incisions longitudinales (7) se terminant par une zone élargie (8).

3. Structure à bande selon la revendication 1, **caractérisée en ce que** chaque dite frange comprend une pluralité de trous circulaires (9).

4. Structure à bande selon la revendication 1, **caractérisée en ce que** dite chaque frange comprend une pluralité de trous ovales (10).

5. Structure à bande selon la revendication 1, **caractérisée en ce que** chaque dite frange comprend une pluralité de trous rectangulaires (11).

6. Structure à bande selon la revendication 1, **caractérisée en ce que** chaque dite frange comprend une pluralité de trous carrés (12).

7. Structure à bande selon la revendication 1, **caractérisée en ce que** lesdits trous desdites franges sont des trous découpés à l'emporte-pièce.
